Europäisches Patentamt

European Patent Office

Office européen des brevets

(11) Publication number: **0 093 097**
A2

## (12) EUROPEAN PATENT APPLICATION

(21) Application number: **83850099.9**

(22) Date of filing: **15.04.83**

(51) Int. Cl.³: **B 62 B 7/08**

(30) Priority: **28.04.82 SE 8202658**

(43) Date of publication of application:
**02.11.83 Bulletin 83/44**

(84) Designated Contracting States:
**DE FR GB IT NL**

(71) Applicant: **ALVEMA REHAB AB**
**Agärdsvägen 23**
**S-342 00 Alvesta(SE)**

(72) Inventor: **Alldén, Per-Olof**
**Helgehusvägen 4**
**S-352 50 Växjö(SE)**

(74) Representative: **Carminger, Lars et al,**
**CARMINGER & UUSITALO PATENTBYRA AB Box 3554**
**S-103 69 Stockholm(SE)**

(54) **Carriage chassis.**

(57) The invention relates to a sprung chassis particularly for perambulators or baby carriages. The chassis includes two side members (1) abd two axles (2) uniting said members and arranged at right angles thereto. Either end of each axle is rigidly attached to one end of a swinging arm (6) having a U-shaped downwardly open cross section, which straddles the side member (1) with a good sliding fit, the other end of the swinging arm being pivotably connected to the side member via a pivoting shaft (7) parallel to the axle. The arm (6) has a greater height than the side member (1) and the axle (2) is attached to the bottom portion of the arm side walls at a distance below the underside of the side member (1). A helical spring (8) is arranged on a vertical bolt (9) extending through holes in the side member (1) and the portion of the swinging arm (6) above the side member. At its upper end the bolt has a head (10) engaging against the upper side of the swinging arm (6), and a nut (11) at its lower end, the spring (8) being confined between the nut (11) and the underside of the side member (1).

# Carriage chassis

The present invention relates to a sprung carriage chassis. The carriage chassis in accordance with the invention has been developped primarily for perambulators or baby carriages, particularly stroller-type baby carriages, but may also be used in conjunction with carriages for other purposes.

In many types of small trucks and carriages that are pulled or pushed, e.g. baby carriages for both lying and sitting infants, there is a need of springing the wheels of the conveyance, so that increased travelling comfort is obtained, which is of prime importance in many cases, e.g. where such are used for handicapped children. Furthermore, smaller wheels and simpler tires can be used which considerably reduces the cost of such carriages. There is at the same time, however, the requirement of a stable and torsionally rigid design, since carriages of this kind are often subjected to considerable stresses when taken over uneven substructures and particularly staircases and kerbs. A further requirement is that the suspension structure is simple and cheep to manufacture. Such structures used so far in baby carriages and similar conveyances have not met these requirements in a satisfactory way.

The object of the present invention is therefore to provide a sprung carriage chassis, particularly for baby carriages and the like, which gives the desired springing function, simultaneously with a stable and torsionally rigid structure, which is cheep and easy to manufacture.

The distinguishing features of the carriage chassis in accordance with the invention will be apparent from the following claims.

The invention will now be described in detail with reference to the accompanying drawing, illustrating as an example a stroller-type baby carriage provided with an embodiment of a chassis in accordance with the invention,

where

Figure 1 is a perspective side view of the carriage; and

Figure 2 is a perspective partial view, showing to a greater scale the implementation of the sprung connection between wheel axles and the side members in the chassis.

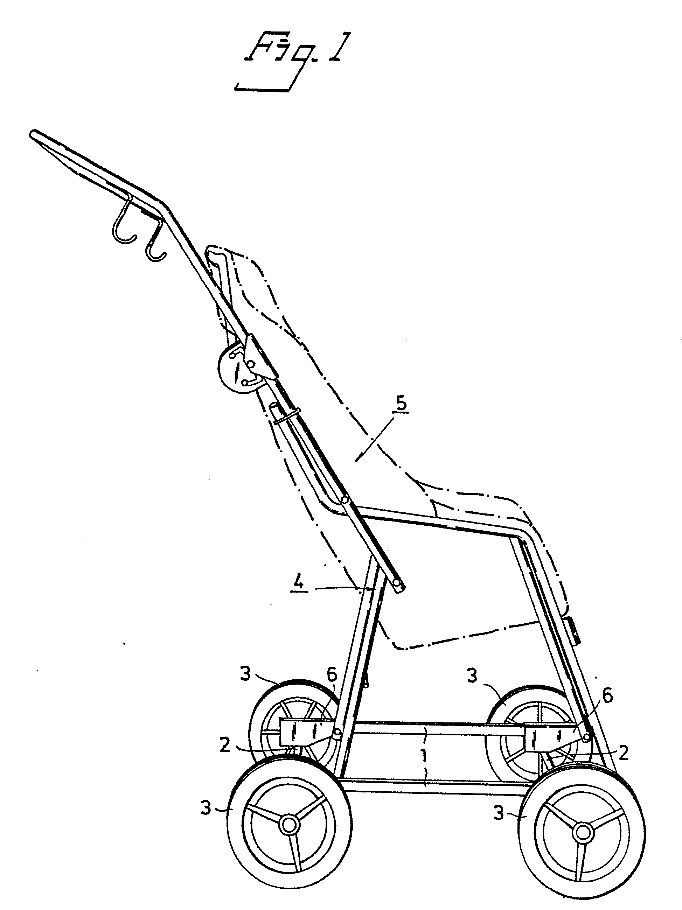

Figure 1 illustrates a stroller-type baby carriage as an example, the carriage having a chassis comprising two side members 1 with two wheel axles 2 attached and at right angles thereto for carrying the wheels 3 of the carriage. This chassis carries the collapsible superstructure of the carriage, generally denoted by 4, in which a seat generally denoted by 5 is mounted, this seat only being schematically indicated by chain-dotted lines. The collapsible superstructure 4 and seat 5 will not be described in more detail here, since they are no part of the present invention. It will be seen from the drawing, however, that the superstructure 4 is directly attached to, and carried by the side members 1 of the chassis.

The present inventive concept relates to the implementation of the chassis and more particularly to the sprung connection between the wheel axles 2 and the side members 1.

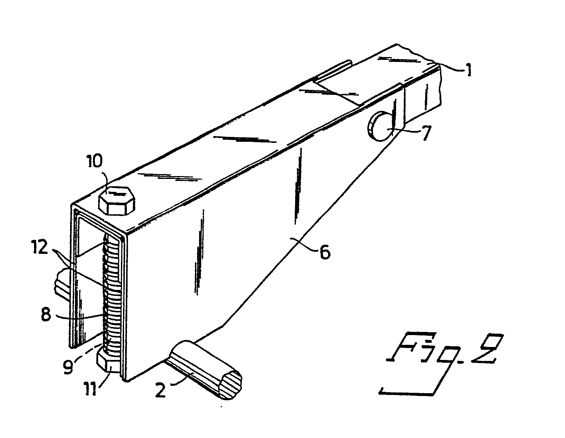

As will be most clearly seen from Figure 2, each axle 2 is at either end rigidly attached to one end of a swinging arm 6, the other end of which is pivotably connected to the side member 1 about a pivoting shaft 7 at right angles to said side member and parallel to the axle 2. The arm 6 has a U-shaped, downwardly open cross section and straddles the side member 1, which similarly has a U-shaped downwardly open cross section in the illustrated embodiment. The section of the arm 6 is adjusted to that of the side member 1 such that the side walls of the arm 6 are well guided against the sides of the member 1. The arm 6 has substantially greater height than the member 1, at least at the end of the arm where the axle 2 is attached, so that the side walls of the arm 6 project downwards a substantial distance below the underside of the member 1, the axle 2 attached to the bottom edge of the side walls of the arm 6, being thus situated at a distance below the member 1. The axle 2 can thus move vertically a limited distance relative the side member 1 as the arm 6 pivots about the pivoting shaft 7.

The required springing is obtained by a helical spring 8 in the illustrated embodiment, the spring being placed round a bolt 9 extending through free holes in the upper sides of the side member 1 and arm 6. The upper end of the bolt is provided with a head or stop 10, engaging against the upper side of the arm 6, while its bottom end is provided with a nut or other spring stop 11, thus enclosing the spring 8 between the nut 11 and the underside of side member 1.

It will be understood that with this implementation of the sprung connection between the axles 2 and side members 1 in the chassis, there is obtained the desired springing of the wheels, while a very stable and torsionally rigid chassis is provided at the same time, which may be subjected to very large stresses in different directions without being deformed.

Linings or plates 12 made from a material with a low coefficient of friction, e.g. a wear resistant plastics material, are to advantage inserted between the insides of the side walls of the swinging arm 6 and the outside of the member 1. Friction between swinging arm 6 and side member 1 is thus reduced and the fit between these two parts is improved with accompanying more positive guidance. Particles of sand and the like are also prevented from coming in between the arm 6 and side member 1.

It will be understood that the side member 1 does not need to have the U-shaped downwardly open cross section used for the illustrated embodiment, and it can quite well have a closed box section. Neither is it necessary for the side member 1 to have a quadratic or rectangular cross section, which could quite well be circular or rounded off in some other way. The U-shaped downwardly open cross sectional shape of the swinging arm will of course be adjusted to such a cross section so that good lateral guidance is still maintained between swinging arm and side member.

0093097

C l a i m s

1.   Carriage chassis, particularly for a perambulator or
baby carriage, including two side members (1) and two wheel
axles (2) joining said side members and arranged at right
angles thereto,  c h a r a c t e r i z e d  in that each
axle (2) is rigidly attached at either end to one end of a
swinging arm (6), the other end of which is pivotably mounted
on a shaft (7) parallel to the axle, said shaft being mounted
in the associated side member (1), there being a springing
element (8) confined between the side member (1) and swinging
arm(6) such that it allows movement of the axle, against the
action of the spring, in an upward direction relative the
side member.

2.   Chassis as claimed in claim 1,  c h a r a c t e r i z e
in that the swinging arm (6) has a substantially U-shaped
downwardly open cross section and is straddling the side
member (1) from above with good guidance between the coactin
sides of member (1) and arm (6), the latter having, at least
at its end supporting the axle (2), a substantially greater
height than the side member (1), such that the side walls of
the arm project downwards a substantial distance below the
underside of the side member, and in that the axle (2) is
attached to these dependent portions of the arm side walls
at a distance from the underside of the member (1).

3.   Chassis as claimed in claim 2,  c h a r a c t e r i z e
in that the spring element includes a helical spring (8)
arranged round a vertical bolt (9) extending through holes
in the side member (1) and the portion of the swinging arm (
situated above the side member, said bolt being provided at
its upper end with a stop (10) engaging against the upper
side of said arm, the lower end of the bolt being provided
with a spring stop (11), said spring (8) thus being confined
between said spring stop (11) and the underside of the
side member (1).

4. Chassis as claimed in claim 2 or 3, c h a r a c t e r- i z e d in that the side member (1) also has a substantially U-shaped downwardly open cross section.

5. Chassis as claimed in any of claims 2 - 4, c h a r a c t e r i z e d in that linings (12) of a material having a low coefficient of friction are inserted between the coacting surfaces of the swinging arm (6) and side member (1).

Fig. 1

Fig. 2